# EUROPÄISCHE PATENTSCHRIFT

(11) **EP 0 352 507 B1**
(45) Veröffentlichungstag und Bekanntmachung des Hinweises auf die Patenterteilung: **27.04.1994**
(21) Anmeldenummer: 89112172.5
(22) Anmeldetag: 04.07.1989
(51) Int. Cl.: G01D 5/243, G01N 27/22

(54) **Schaltungsanordnung zum Bestimmen einer charakteristischen Grösse eines HF-Oszillators**
Circuitry for establishing a parameter of a HF oscillator
Circuit pour déterminer un paramètre d'un oscillateur HF

(30) Priorität: 23.07.1988 DE 3825111
(43) Veröffentlichungstag der Anmeldung: 31.01.1990
(73) Patentinhaber: KÖRBER AG, D-21027 Hamburg (DE)
(72) Erfinder: Hohenstein, Norbert, D-2056 Glinde (DE); Schröder, Dierk, Dr., D-2000 Hamburg 65 (DE)

(56) Entgegenhaltungen:
- EP-A- 0 125 386
- DE-A- 2 119 507
- US-A- 3 979 581
- US-A- 4 160 971

## Beschreibung

Die Erfindung betrifft eine Schaltungsanordnung zum Bestimmen einer charakteristischen Größe eines HF-Oszillators, der eine von einer physikalischen Meßgröße beeinflußbare Impedanz, z. B. den Meßkondensator eines Feuchtemeßkreises, enthält, und der mit einem Impulsgeber zum Abgeben von relativ kurzen Anregungsimpulsen verbunden ist, nach denen der Oszillator jeweils während eines bis zum folgenden Anregungsimpuls dauernden Meßintervalls frei schwingt, mit einer Meßanordnung zum Bestimmen der Dämpfung der feien Schwingungen.

Meßimpedanzen aufweisende Oszillatoren der eingangs genannten Art, deren Dämpfung (und eventuell auch Resonanzfrequenz), durch die physikalischen Meßgrößen über eine Beeinflussung der Impedanzen verändert werden, so daß eine Bestimmung der Meßgrößen selbst möglich ist, sind der DE-A-2 119 507 und der EP-A-0 125 386 zu entnehmen. In beiden Fällen soll die Lage eines mechanischen Elementes gegenüber der Meßimpedanz des Oszillators erfaßt werden. Hierzu wird nach Anregung des Oszillators durch Anregungsimpulse die Zahl der gedämpften Schwingungen zwischen den Anregungsimpulsen erfaßt, deren Amplituden über einem Schwellenwert liegen. Aus der Zahl der zwischen den Anregungsimpulsen gezählten Schwingungen kann auf die Dämpfung und damit auf die Lage des zu erfassenden Gegenstandes relativ zum Oszillator geschlossen werden.

Die der Erfindung zugrundeliegende Aufgabe besteht darin, die Ermittlung der Dämpfung von Oszillatoren des eingangs genannten Typs zu verbessern.

Gemäß der Erfindung wird diese Aufgabe dadurch gelöst, daß dem Oszillator Schaltungselemente zum Bilden von den Hüllkurven dar freien Schwingungen in den Meßintervallen entsprechenden Signalen nachgeschaltet sind und daß eine Abtastungsanordnung zum Abtasten der Signale zu definierten Zeiten innerhalb der Meßintervalle und zum Bilden von Quotientensignalen aus den Abtastwerten vorhanden ist.

Eine besonders vorteilhafte Art der Hüllkurvenbildung besteht gemäß einer bevorzugten Weiterbildung der Erfindung darin, daß die freien Schwingungen gleichgerichtet werden. Hierzu werden die freien Schwingungen einer Gleichrichteranordnung in Form eines Ringmischers zugeführt, dem außerdem die Ausgangssignale eines die freien Schwingungen in Schwingungen von Rechteckform gleicher Frequenz umformenden Komparators zugeführt werden. Das gleichgerichtete elektrische Signal beaufschlagt dann einen Tiefpaß, dessen Ausgangssignal der Hüllkurve der freien Schwingungen in einem Meßintervall entspricht.

Die in den einzelnen Meßintervallen aus den freien Schwingungen gebildeten Hüllkurven klingen entsprechend der Dämpfung des Oszillators mehr oder weniger schnell ab. Gemäß einer Weiterbildung der Erfindung kann das Abklingverhalten und damit die Dämpfung dadurch erfaßt werden, daß der Abtastanordnung die Abtastung steuernde Steuersignale zuführbar sind, wenn die summierten Ausgangssignale eines dem Oszillator nachgeschalteten Komparators zum Umformen der feien Schwingungen in Rechteckimpulse gleicher Frequenz in einem Meßintervall vorgegebene Werte erreicht haben.

Damit die von einem Impulsgeber abgegebenen Anregungsimpulse die Anregung des Oszillators zu Beginn eines Meßintervalls genau zum richtigen Zeitpunkt übernehmen, ist gemäß der Erfindung eine Synchronisierstufe zum Synchronisieren der von dem Impulsgeber abgegebenen Anregungsimpulse bezüglich einer Flanke der von dem Komparator abgegebenen Rechteckschwingung vorgesehen.
Wenn außer der Dämpfung auch noch die Resonanzfrequenz des Oszillators zur Bildung des der Meßgröße entsprechenden Signals erforderlich ist, läßt sich ein entsprechendes Signal in besonders vorteilhafter Weiterbildung der Erfindung dadurch erzeugen, daß dem Oszillator zum Bestimmen der Resonanzfrequenz eine Zählstufe für die freien Schwingungen je vorgegebener Meßperiode nachgeschaltet ist. Anstatt einer kapazitiven Meßimpedanz, z. B. eines Meßkondensators, kann der Oszillator auch eine induktive Meßimpedanz, also z. B. einen mit HF beaufschlagten Elektromagneten, enthalten. Es ist sogar möglich, daß ein HF-Oszillator beide Arten von Meßimpedanzen enthält. In den zuletzt genannten Fällen können der Dämpfung und/oder der Resonanzfrequenz des Oszillators entsprechende Signale in entsprechender Weise gebildet werden.
Der mit der Erfindung verbundene Vorteil besteht darin, daß sich die Dämpfung und - falls erforderlich auch die Resonanzfrequenz - von Oszillatoren in Meßkreisen schnell, fortlaufend und genau erfassen lassen.

Die Erfindung wird anhand eines Ausführungsbeispiels näher erläutert.

Es zeigen:
- Figur 1: eine Schaltungsanordnung zur Ermittlung der Dämpfung und Resonanzfrequenz eines Meßoszillators,
- Figur 2: den Verlauf der freien Schwingungen des Oszillators nach Beaufschlagung mit periodischen Anregungsimpulsen,
- Figur 3: die in einem Ringmischer gleichgerichteten freien Schwingungen nach Figur 2,
- Figur 4: die von Wechselanteilen befreiten Signale nach Figur 3.

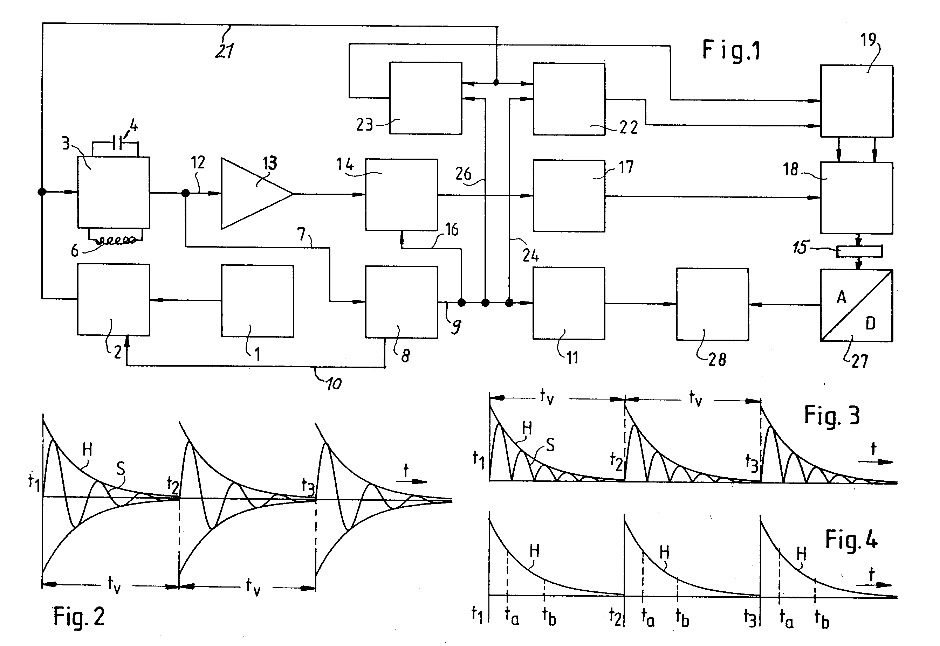

In Figur 1 gibt ein Impulsgeber 1 periodisch, z. B. mit einer Frequenz von ca. 250 KHZ, hochfrequente Anregungsimpulse über eine Synchronisierstufe 2, deren Funktion später erläutert wird, an einen HF-Meßoszillator 3 ab. Dieser Meßoszillator enthält einen Meßkondensator 4, der nicht dargestelltes Meßgut, dessen Feuchteanteil erfaßt werden soll, enthält oder von diesem fortlaufend durchsetzt wird. Bei dem Meßgut kann es sich um Tabak, Kaffee oder dergleichen Stoffe handeln. Der Meßoszillator weist in an sich bekannter Weise außer der Kapazität des Meßkondensators 4 auch eine z. B. als Spule 6 ausgebildete Induktivität auf. Von den Anregungsimpulsen angeregt, führt der Meßoszillator 3 freie Schwingungen aus, deren Frequenz der Resonanzfrequenz des Oszillators entspricht, und die entsprechend der Dämpfung des Oszillators, die von der Feuchte und Masse des Meßgutes abhängt, mehr oder weniger schnell abklingen.

Figur 2 zeigt den prinzipiellen Verlauf der Schwingungen S über die Zeit t, deren Abklingverhalten und damit die Dämpfung des Meßoszillators durch die Hüllkurven H darstellbar sind. Zu den Anregungszeitpunkten t1, t2, t3, zwischen denen ein Meßintervall tv liegt, erhält der Meßoszillator Anregungsimpulse von dem Impulsgeber 1. Die freien Schwingungen S des Meßoszillators 3, die in einem Meßintervall tv sehr viel zahlreicher sind als die aus Übersichtsgründen wenigen gezeichneten Schwingungen, werden über Leitung 7 einem Impulsformer 8 zugeführt, der z. B. in bekannter Weise als mitgekoppelter Operationsverstärker ausgebildet sein kann und der die stetigen freien Schwingungen in Rechteckimpulse gleicher Frequenz aber konstanter Amplitude umformt. Im folgenden ist der Impulsformer 8 als Komparator bezeichnet. Die Rechteckimpulse des Komparators 8 gelangen über eine Leitung 9 zu einer Zählstufe 11, in der sie, vorzugsweise während gleicher Meßperioden, gezählt werden. Der Zählerstand in der Zählstufe 11 oder ein diesem entsprechendes Signal ist dann ein bereits digitalisiertes Maß für die Resonanzfrequenz des Meßoszillators 3.
Das Ausgangssignal von Komparator 8 wird über eine Leitung 10 außerdem der Synchronisierstufe 2 zugeführt, die die Anregungsimpulse des Impulsgebers 1 mit den freien Schwingungen des Oszillators 3 synchronisiert. Es ist dann möglich, die Frequenz über ein Meßintervall tv hinaus zu messen und die Genauigkeit dadurch zu erhöhen. Die freien Schwingungen des Meßoszillators 3 beaufschlagen über eine Leitung 12 und einen Verstärker 13 ein Schaltungselement 14, das als Ringmischer (auch Ringmodulator genannt, englisch: double-balanced mixer) in der Hochfrequenztechnik bekannt ist. Eine Beschreibung des Aufbaus und der Wirkungsweise findet sich in dem Buch "Elektronische Bauelemente und Netzwerke II"- von H. G. Unger und W. Schultz, Vieweg-Verlag, auf den Seiten 138 bis 143. Insbesondere eignet sich ein Schaltungselement, das von der Firma INDUSTRIAL-ELECTRONICS GmbH, 6000 Frankfurt/Main, Klüberstraße 14, unter der Modell-Nr. SRA-6 vertrieben wird. Der Ringmischer erhält gleichzeitig über Leitung 16 die Rechteckausgangsimpulse des Komparators 8, die über einen internen Multiplikationsvorgang im Ringmischer 14 die verstärkten freien Schwingungen des Meßoszillators 3 gleichrichten, so daß die in Figur 2 unter der Zeitachse befindlichen Signalteile der Schwingung nach oben geklappt werden, was Figur 3 zeigt. Das Ausgangssignal des Schaltungselementes 14 wird einem Tiefpaß 17 zugeführt, der nur den Gleichstromanteil des Signals passieren läßt und die Wechselanteile (Oberschwingungen) ausfiltert. Das Ergebnis entspricht gemäß Figur 4 der Hüllkurve H der freien Schwingung des Meßoszillators 3. Das der Hüllkurve entsprechende Ausgangssignal von Tiefpaß 17 wird einem sogenannten Abtastverstärker 18 (track/ sample-hold amplifier) zugeführt, dessen zugehörige Steuerungseinheit 19 dafür sorgt, daß zu bestimmten Abtastzeitpunkten ta, tb innerhalb eines Meßintervalls tv die Augenblickswerte des der Hüllkurve H entsprechenden Signals erfaßt und einem Quotientenbildner 15 zugeführt werden, der ein aus beiden Signalen gebildetes Quotientensignal abgibt. Hierzu erhält die Steuerungseinheit 19 Signale von zwei Zählstufen 22 und 23, die über Leitungen 24 bzw. 26 von Ausgangsimpulsen des Komparators 8 beaufschlagt werden. Die Zählstufen werden über Leitung 21 von dem Ausgangssignal der Synchronisierstufe 2 zu Beginn eines Meßintervalls auf Null gesetzt und aktiviert, so daß die von dem Komparator abgegebenen Impulse gezählt werden können. Wird die vorgegebene Anzahl von den gezählten Impulsen in den Zählstufen erreicht, so geben sie zu den Zeitpunkten ta, tb Steuersignale an die Steuerungseinheit 19 ab, die den Abtastverstärker 18 zum Erfassen der Augenblickswerte des Signals H ansteuert. Da die von dem Impulsgeber 1 abgegebenen Anregungssignale über die Synchronisierstufe mit den Ausgangssignalen des Komparators 8 synchronisiert werden, entspricht das Erfassen einer bestimmten vorgegebenen Zahl von Schwingungen des Komparators 8 genau einer bestimmten Zeit, die seit Beginn eines Meßintervalls tv vergangen ist, so daß die Abtastzeitpunkte ta, tb bezüglich der Meßintervalle tv genau definiert sind. Als Abtastverstärker eignen sich Verstärker vom Typ HT C-0300 der Fa. ANALOG DEVICES, Norwood, MA 02062, USA.
Das analoge Ausgangssignal des Abtastverstärkers 18 gelangt zu dem Analog-Digital-Umsetzer 27, in dem es in ein digitales Signal umgesetzt wird. Die digitalen Ausgangssignale von Analog-Digital-Umsetzer 27 und Zählstufe 11 gelangen in eine Rechnerstufe 28, in der aus dem der Dämpfung des Meßoszillators 3 entsprechenden Signal und dem der Resonanzfrequenz entsprechenden Signal ein Signal gebildet wird, das der Feuchte des Meßgutes entspricht.

Die Erfindung ist auch in den Fällen vorteilhaft anwendbar, in denen allein die Dämpfung eines Meßoszillators mit hoher Genauigkeit erfaßt werden soll. Die Erfindung ist auch anwendbar bei Meßoszillatoren, deren Induktivität sich in Abhängigkeit von der Messung ändert oder deren Induktivität und Kapazität sich in Abhängigkeit von der Messung ändern.

## Patentansprüche

1. Schaltungsanordnung zum Bestimmen einer charakteristischen Größe eines HF-Oszillators, der eine von einer physikalischen Meßgröße beeinflußbare Impedanz, z. B. den Meßkondensator eines Feuchtemeßkreises, enthält, und der mit einem Impulsgeber zum Abgeben von relativ kurzen Anregungsimpulsen verbunden ist, nach denen der Oszillator jeweils während eines bis zum folgenden Anregungsimpuls dauernden Meßintervalls frei schwingt, mit einer Meßanordnung zum Bestimmen der Dämpfung der freien Schwingungen, dadurch gekennzeichnet, daß dem Oszillator (3) Schaltungselemente (14, 17) zum Bilden von den Hüllkurven (H) der freien Schwingungen (S) in den Meßintervallen (tv) entsprechenden Signalen nachgeschaltet sind und daß eine Abtastungsanordnung (18) zum Abtasten der Signale zu definierten Zeiten (ta, tb) innerhalb der Meßintervalle und zum bilden von Quotientensignalen aus den Abtastwerten vorhanden ist.

2. Schaltungsanordnung nach Anspruch 1, dadurch gekennzeichnet, daß dem Oszillator (3) ein Komparator (8) zum Umformen der freien Schwingungen in Rechteckimpulse gleicher Frequenz nachgeschaltet ist.

3. Schaltungsanordnung nach Anspruch 1 und/oder 2, dadurch gekennzeichnet, daß die Schaltungselemente zum Bilden von den Hüllkurven der freien Schwingungen entsprechenden Signalen eine Gleichrichteranordnung (14) und einen Tiefpaß (17) aufweisen.

4. Schaltungsanordnung nach Anspruch 3, dadurch gekennzeichnet, daß die Gleichrichteranordnung als Ringmischer (14) ausgebildet ist, dem einerseits die freien Schwingungen, andererseits die Ausgangssignale des Komparators (8) zuführbar sind.

5. Schaltungsanordnung nach irgendeinem der vorhergehenden Ansprüche, dadurch gekennzeichnet, daß der Abtastanordnung (14) die Abtastung steuernde Steuersignale zuführbar sind, wenn die summierten Ausgangssignale des Komparators (8) in einem Meßintervall vorgegebene Werte erreicht haben.

6. Schaltungsanordnung nach irgendeinem der vorhergehenden Ansprüche, gekennzeichnet durch eine Synchronisierstufe (2) zum Synchronisieren der von dem Impulsgeber abgegebenen Anregungsimpulse bezüglich einer Flanke der von dem Komparator (8) abgegebenen Rechteckschwingung.

7. Schaltungsanordnung nach irgendeinem der vorhergehenden Ansprüche, dadurch gekennzeichnet, daß dem Oszillator (3) zum Bestimmen der Resonanzfrequenz eine Zählstufe (11) für die freien Schwingungen je vorgegebener Meßperiode nachgeschaltet ist.

## Claims

1. Circuit arrangement for determining a characteristic variable of a high-frequency oscillator which contains an impedance, e.g. the measuring capacitor of a moisture measuring circuit, capable of being influenced by a physical measured variable, and which is connected to a pulse generator for emitting relatively short excitation pulses, in accordance with which the oscillator oscillates freely during a measurement interval which lasts until the following excitation pulse, having a measuring arrangement for determining the damping of the free oscillations, characterized in that circuit elements (14, 17) for forming signals corresponding to the envelope curves (H) of the free oscillations (S) in the measurement intervals (tv) are arranged downstream of the oscillator (3), and in that a scanning arrangement (18) for scanning the signals at defined times (ta, tb) within the measurement intervals and for forming quotient signals from the scan values is provided.

2. Circuit arrangement according to Claim 1, characterized in that a comparator (8) for converting the free oscillations into rectangular pulses with the same frequency is arranged downstream of the oscillator (3).

3. Circuit arrangement according to Claim 1 and/or 2, characterized in that the circuit elements have a rectifier arrangement (14) and a low pass (17) for forming signals corresponding to the envelope curves of the free oscillations.

4. Circuit arrangement according to Claim 3, characterized in that the rectifier arrangement is constructed as a double-balanced mixer (14) to which on the one hand the free oscillations and on the other hand the output signals of the comparator (8) can be supplied.

5. Circuit arrangement according to any one of the preceding claims, characterized in that control signals controlling scanning can be supplied to the scanning arrangement (14) when the totalled output signals of the comparator (8) have reached predetermined values in a measurement interval.

6. Circuit arrangement according to any one of the preceding claims, characterized by a synchronizing stage (2) for synchronizing the excitation pulses emitted by the pulse generator with reference to an edge of the rectangular oscillation emitted by the comparator (8).

7. Circuit arrangement according to any one of the preceding claims, characterized in that a counting stage (11) for the free oscillations of each predetermined measurement period is arranged downstream of the oscillator (3) for determining the resonant frequency.

## Revendications

1. Circuit destiné à déterminer une grandeur caractéristique d'un oscillateur H.F., qui renferme une impédance susceptible d'être influencée par une grandeur de mesure physique, par exemple le condensateur de mesure d'un circuit de mesure d'humidité, et qui est relié à un générateur d'impulsions destiné à délivrer des impulsions d'excitation relativement courtes, après lesquelles l'oscillateur oscille librement pendant un intervalle de mesure qui dure jusqu'à la prochaine impulsion d'excitation, le circuit comportant un ensemble de mesure destiné à déterminer l'amortissement des oscillations libres, caractérisé en ce qu'en aval de l'oscillateur (3) sont montés des éléments de circuit (14, 17) pour former des signaux correspondant aux courbes enveloppes (H) des oscillations libres (S) dans les intervalles de mesure (tv), et en ce que le circuit comprend un dispositif de balayage (18) pour balayer les signaux à des instants définis (ta, tb) à l'intérieur des intervalles de mesure, et pour former des signaux de quotient des valeurs de balayage.

2. Circuit selon la revendication 1, caractérisé en ce qu'en aval de l'oscillateur (3) est monté un comparateur (8) destiné à convertir les oscillations libres en impulsions rectangulaires de même fréquence.

3. Circuit selon la revendication 1 ou 2, caractérisé en ce que les éléments de circuit destinés à former des signaux correspondant aux courbes enveloppes des oscillations libres, comprennent un ensemble redresseur (14) et un circuit passe-bas (17).

4. Circuit selon la revendication 3, caractérisé en ce que l'ensemble redresseur est réalisé sous forme de mélangeur toroïdal (14) auquel peuvent être amenés, d'une part, les oscillations libres, et d'autre part les signaux de sortie du comparateur (8).

5. Circuit selon l'une quelconque des revendications précédentes, caractérisé en ce qu'il est possible d'amener au dispositif de balayage (14) des signaux de commande commandant le balayage, lorsque les signaux de sortie cumulés du comparateur (8) atteignent, dans un intervalle de mesure, des valeurs définies à l'avance.

6. Circuit selon l'une quelconque des revendications précédentes, caractérisé par un étage de synchronisation (2) destiné à synchroniser les impulsions d'excitation délivrées par le générateur d'impulsions, par rapport à un flanc de l'oscillation rectangulaire délivrée par le comparateur (8).

7. Circuit selon l'une quelconque des revendications précédentes, caractérisé en ce qu'en aval de l'oscillateur (3), en vue de déterminer la fréquence de résonance, est monté un étage de comptage (11) pour les oscillations libres par période de mesure définie à l'avance.
